# EUROPEAN PATENT APPLICATION

(11) **EP 4 557 417 A1**
(43) Date of publication of application: **21.05.2025**
(21) Application number: 24203824.8
(22) Date of filing: 01.10.2024
(51) Int. Cl.: H01M 10/04, H01M 10/0583, H01M 10/0585, H01M 10/0587, H01M 50/15, H01M 50/474, H01M 50/103, H01M 50/548, H01M 10/052

(54) **SECONDARY BATTERY AND METHOD OF MANUFACTURING SAME**

(30) Priority: 15.11.2023 JP 2023194371
(71) Applicant: Prime Planet Energy & Solutions, Inc., Chuo-ku Tokyo 103-0022 (JP)
(72) Inventor: HOSOKAWA, Takashi, Tokyo, 103-0022 (JP)
(74) Representative: Kuhnen & Wacker Patent- und Rechtsanwaltsbüro PartG mbB

(57) **Abstract**

In a method of manufacturing a secondary battery, a separator (800) has a positive-electrode-side protruding region (800x) protruding to a positive electrode tab (260) side with respect to an end portion of a positive electrode protective layer (243), at an end portion of the separator (800) on a negative electrode tab (230) side, the separator (800) has a negative-electrode-side protruding region (800y) protruding to the negative electrode tab (230) side with respect to an end portion of a negative electrode active material layer (212), and at the negative-electrode-side protruding region (800y), the separator (800) has a region crushed by the first spacer (600).

## Description

### CROSS REFERENCE TO RELATED APPLICATIONS

This nonprovisional application is based on Japanese Patent Application No. 2023-194371 filed on November 15, 2023 with the Japan Patent Office, the entire contents of which are hereby incorporated by reference.

### BACKGROUND OF THE INVENTION

### Field of the Invention

The present technology relates to a secondary battery and a method of manufacturing the secondary battery.

### Description of the Background Art

U.S. Patent Publication No. 2022/0302533 discloses a structure in which electrode tab groups are provided at both ends of an electrode assembly and the electrode tab groups are connected to electrode terminals at both ends of a battery case in a long-side direction thereof. Components that accommodate the electrode tab groups at the both end sides of the battery case are provided to simplify each of the shapes of the electrode tab groups, thereby suppressing a current collecting path from being long in length.

### SUMMARY OF THE INVENTION

When inserting the electrode assembly into the battery case and/or when raising the case at the time of injection, the electrode assembly (a negative electrode active material layer present at a corner portion) may be damaged. Further, when inserting the electrode assembly into the battery case and/or when raising the case at the time of injection, an end portion of the negative electrode located at a lower end thereof may be brought into contact with a spacer, a current collector or the like, and may be accordingly damaged.

An object of the present technology is to provide a secondary battery and a method of manufacturing the secondary battery to avoid possible damage of an electrode assembly when inserting the electrode assembly into a battery case and/or when raising the case at the time of injection so as to attain high energy density and high reliability.

The present technology provides the following secondary battery and the following method of manufacturing the secondary battery.
[1] A secondary battery comprising: an electrode assembly in which a positive electrode plate and a negative electrode plate are stacked with a separator being interposed between the positive electrode plate and the negative electrode plate; and a case that accommodates the electrode assembly, wherein the case includes a case main body provided with a first opening at one end portion of the case main body and a second opening at the other end portion of the case main body, a first sealing plate that seals the first opening, and a second sealing plate that seals the second opening, a first spacer is disposed between the first sealing plate and the electrode assembly, a second spacer is disposed between the second sealing plate and the electrode assembly, the positive electrode plate has a positive electrode tab at an end portion of the positive electrode plate on the second sealing plate side, the negative electrode plate has a negative electrode tab at an end portion of the negative electrode plate on the first sealing plate side, the positive electrode plate includes a positive electrode core body, a positive electrode active material layer formed on the positive electrode core body, and a positive electrode protective layer formed on the positive electrode core body, in the positive electrode plate, the positive electrode protective layer is located on the positive electrode tab side with respect to the positive electrode active material layer, the negative electrode plate includes a negative electrode core body and a negative electrode active material layer formed on the negative electrode core body, at an end portion of the separator on the positive electrode tab side, the separator has a positive-electrode-side protruding region protruding to the positive electrode tab side with respect to an end portion of the positive electrode protective layer, at an end portion of the separator on the negative electrode tab side, the separator has a negative-electrode-side protruding region protruding to the negative electrode tab side with respect to an end portion of the negative electrode active material layer, and at the negative-electrode-side protruding region, the separator has a region crushed by the first spacer.
[2] The secondary battery according to [1], wherein at the positive-electrode-side protruding region, the separator has a region crushed by the second spacer, and a width by which the negative-electrode-side protruding region is crushed is larger than a width by which the positive-electrode-side protruding region is crushed.
[3] The secondary battery according to [1] or [2], wherein in the separator, a width of the negative-electrode-side protruding region is larger than a width of the positive-electrode-side protruding region.
[4] The secondary battery according to any one of [1] to [3], wherein a space volume from the end portion of the negative electrode active material layer to the first sealing plate is smaller than a space volume from the end portion of the positive electrode protective layer to the second sealing plate.
[5] A method of manufacturing a secondary battery, the method comprising: producing an electrode assembly in which a positive electrode plate and a negative electrode plate are stacked with a separator being interposed between the positive electrode plate and the negative electrode plate; and accommodating the electrode assembly in a case, wherein the case includes a case main body provided with a first opening at one end portion of the case main body and a second opening at the other end portion of the case main body, a first sealing plate that seals the first opening, and a second sealing plate that seals the second opening, the accommodating the electrode assembly in the case includes inserting the electrode assembly into the case main body through the first opening, the electrode assembly has a main body portion, a positive electrode tab located on the second sealing plate side with respect to the main body portion and provided on the positive electrode plate, and a negative electrode tab located on the first sealing plate side with respect to the main body portion and provided on the negative electrode plate, the positive electrode plate includes a positive electrode core body, a positive electrode active material layer formed on the positive electrode core body, and a positive electrode protective layer formed on the positive electrode core body, in the positive electrode plate, the positive electrode protective layer is located on the positive electrode tab side with respect to the positive electrode active material layer, the negative electrode plate includes a negative electrode core body and a negative electrode active material layer formed on the negative electrode core body, at an end portion of the main body portion of the electrode assembly on the positive electrode tab side, the positive electrode protective layer protrudes to the positive electrode tab side with respect to an end portion of the negative electrode active material layer, at an end portion of the main body portion of the electrode assembly on the negative electrode tab side, the negative electrode active material layer protrudes to the negative electrode tab side with respect to an end portion of the positive electrode active material layer, at an end portion of the separator on the positive electrode tab side, the separator has a positive-electrode-side protruding region protruding to the positive electrode tab side with respect to an end portion of the positive electrode protective layer, at an end portion of the separator on the negative electrode tab side, the separator has a negative-electrode-side protruding region protruding to the negative electrode tab side with respect to an end portion of the negative electrode active material layer, and a protruding length of the negative-electrode-side protruding region is larger than a protruding length of the positive-electrode-side protruding region.
[6] The method of manufacturing a secondary battery according to [5], wherein each of the protruding length of the negative-electrode-side protruding region and the protruding length of the positive-electrode-side protruding region is 2 mm or more.
[7] The method of manufacturing a secondary battery according to [5] or [6], wherein the inserting the electrode assembly into the case main body through the first opening includes inserting the electrode assembly into the case main body through the first opening with the spacer being disposed between the first sealing plate and the electrode assembly, and the negative-electrode-side protruding region is accommodated in the case main body with the negative-electrode-side protruding region being crushed at a region in abutment with the spacer.
[8] The method of manufacturing a secondary battery according to any one of [5] to [7], wherein the electrode assembly is inserted into the case main body from an end portion of the electrode assembly on a side on which the positive electrode tab is disposed.
[9] The method of manufacturing a secondary battery according to [8], wherein after the negative electrode tab and the first sealing plate are connected to each other, the electrode assembly is inserted into the case main body.
[10] The method of manufacturing a secondary battery according to [8], wherein after the electrode assembly is inserted into the case main body, the positive electrode tab and the second sealing plate are connected to each other.
[11] The method of manufacturing a secondary battery according to any one of [5] to [10], wherein the negative electrode tab is electrically connected, through a negative electrode current collector, to a negative electrode terminal attached to the first sealing plate.
[12] The method of manufacturing a secondary battery according to any one of [5] to [10], wherein the positive electrode tab is electrically connected, through a positive electrode current collector, to a positive electrode terminal attached to the second sealing plate.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to one embodiment.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a cross sectional view of a negative electrode plate.
Fig. 8 is a front view showing the negative electrode plate.
Fig. 9 is a cross sectional view of a positive electrode plate.
Fig. 10 is a front view showing the positive electrode plate.
Fig. 11 is a cross sectional view of the secondary battery shown in Fig. 1 along XI-XI.
Fig. 12 is a cross sectional view of the secondary battery shown in Fig. 1 along XII-XII.
Fig. 13 is a flowchart showing a method of manufacturing the secondary battery according to one embodiment.
Fig. 14 is a perspective view showing a state before two electrode assemblies included in the secondary battery according to one embodiment are overlapped with each other.
Fig. 15 is a cross sectional view of each of the electrode assemblies and the current collectors shown in Fig. 14 along XV-XV.
Fig. 16 is a perspective view showing a state of attaching a holder and a spacer to the electrode assembly.
Fig. 17 is a perspective view showing a state of attaching a sealing plate to the current collectors on the negative electrode side.
Fig. 18 is a cross sectional view of each of the electrode assemblies and the current collectors shown in Fig. 17 along XVIII-XVIII.
Fig. 19 is a first perspective view showing an implementation of the spacer.
Fig. 20 is a second perspective view showing the implementation of the spacer.
Fig. 21 is a perspective view showing a state of inserting the electrode assemblies into the case main body.
Fig. 22 is a perspective view showing a state of attaching a sealing plate to current collectors on the positive electrode side.
Fig. 23 is a cross sectional view of each of the electrode assemblies and the current collectors shown in Fig. 22 along XXIII-XXIII.
Fig. 24 is a perspective view showing a configuration of the secondary battery.
Fig. 25 is a cross sectional view taken along a plane including the Z axis with the electrode assembly being inserted in the case main body.
Fig. 26 is a cross sectional view taken along the plane including the Z axis and showing a schematic configuration of the electrode assembly after stacking.
Fig. 27 is a cross sectional view taken along the plane including the Z axis and showing a schematic configuration of the electrode assembly after the secondary battery is completed.
Fig. 28 is a schematic cross sectional view showing an implementation (individual-sheet type) of the electrode assembly.
Fig. 29 is a schematic cross sectional view showing an implementation (meandering type) of the electrode assembly.
Fig. 30 is a schematic cross sectional view showing an implementation (wound type) of the electrode assembly.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "secondary battery" is not limited to a lithium ion battery, and may include other secondary batteries such as a nickel-metal hydride battery and a sodium-ion battery. In the present specification, the term "electrode" may collectively represent a positive electrode and a negative electrode.

It should be noted that in the figures, when the electrode assembly included in the secondary battery is a stacked type electrode assembly, the X direction is defined as a long-side direction of a stacked surface, whereas when the electrode assembly is a wound type electrode assembly, the X direction is defined as a direction along a winding axis thereof. Further, the Y direction is defined as a short-side direction of the electrode assembly when viewed in the X direction, and the Z direction is defined as a long-side direction of the electrode assembly when viewed in the X direction. In order to facilitate understanding of the invention, the size of each configuration in the figures may be illustrated to be changed from its actual size.

In the specification of the present application, the first direction (X direction) may be referred to as a "width direction" of the secondary battery or the case main body, the second direction (Z direction) may be referred to as a "height direction" of the secondary battery or the case main body, and the third direction (Y direction) may be referred to as a "thickness direction" of the secondary battery or the case main body.

### (Overall Configuration of Battery)

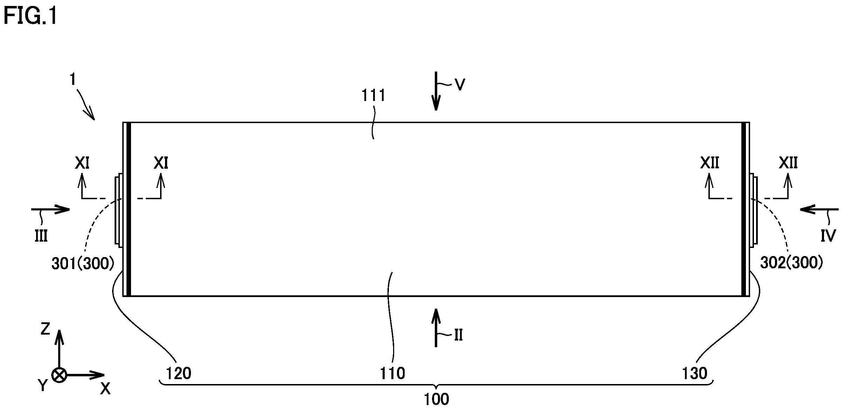

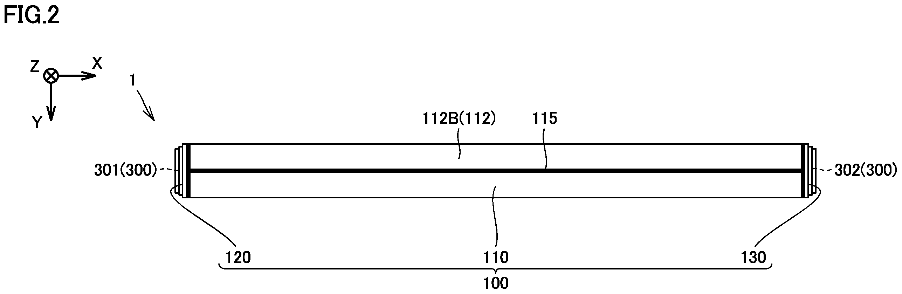

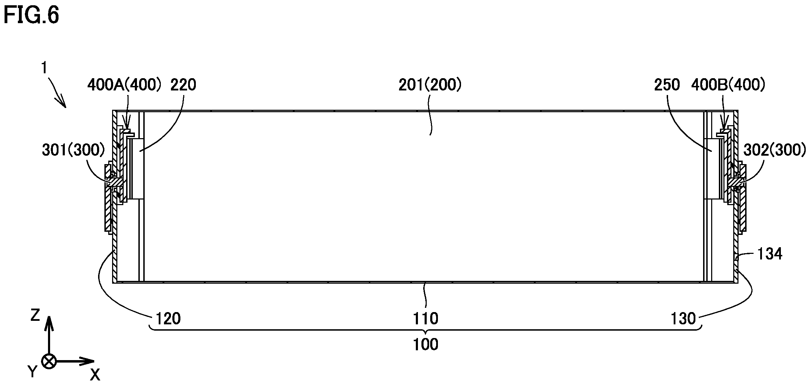

Fig. 1 is a front view of a secondary battery 1 according to one embodiment. Figs. 2 to 5 are diagrams showing states of secondary battery 1 shown in Fig. 1 when viewed in directions of arrows II, III, IV, and V respectively. Fig. 6 is a front cross sectional view of secondary battery 1 shown in Fig. 1.

Secondary battery 1 can be mounted on a battery electric vehicle (BEV), a plug-in hybrid electric vehicle (PHEV), a hybrid electric vehicle (HEV), or the like. It should be noted that the purpose of use of secondary battery 1 is not limited to the use on a vehicle.

As shown in Figs. 1 to 6, secondary battery 1 includes a case 100, an electrode assembly 200, electrode terminals 300, and current collectors 400. Case 100 includes a case main body 110, a sealing plate 120 (first sealing plate), and a sealing plate 130 (second sealing plate).

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, sealing plate 120 (first wall) and sealing plate 130 (second wall) are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, laser welding). Each of the corners of the "prismatic tubular shape" may have a shape with a curvature. Moreover, the secondary battery in the present technology is not necessarily limited to the prismatic secondary battery.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 desirably has an area larger than that of each of the pair of second side surface portions 112.

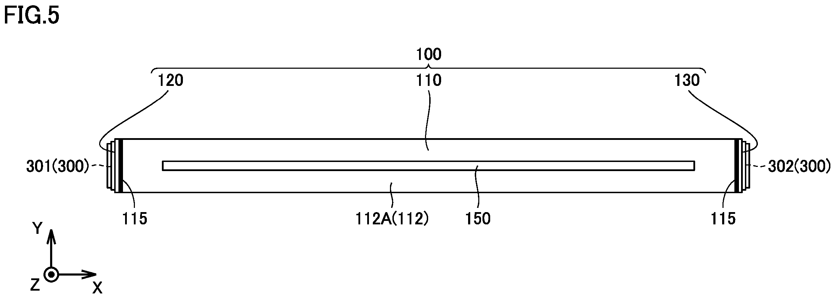

As shown in Fig. 5, a gas-discharge valve 150 is provided in one second side surface portion 112A of the pair of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. Gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112B of the pair of second side surface portions 112. Joining portion 115 extends in the width direction (X direction) of secondary battery 1. At joining portion 115, the end sides of the plate-shaped member of case main body 110 are joined to each other.

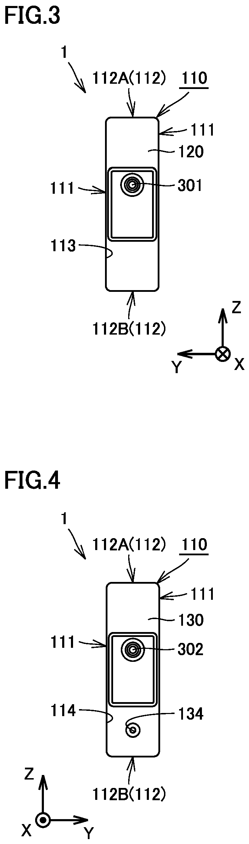

As shown in Fig. 3, an opening 113 (first opening) is provided at an end portion of case main body 110 on a first side in the first direction (X direction). Opening 113 is sealed by sealing plate 120. Joining portion 115 is formed at opening 113 so as to seal opening 113. Each of opening 113 and sealing plate 120 has a substantially rectangular shape in which the Y direction corresponds to its short-side direction and the Z direction corresponds to its long-side direction. It should be noted that the substantially rectangular shape includes a rectangular shape or a generally rectangular shape such as a rectangular shape having corners each with a curvature.

Sealing plate 120 (first sealing plate) is provided with a negative electrode terminal 301. The position of negative electrode terminal 301 can be appropriately changed.

As shown in Fig. 4, an opening 114 (second opening) is provided at an end portion of case main body 110 on a second side opposite to the first side in the first direction (X direction). That is, opening 114 is located at an end portion opposite to opening 113, and openings 113, 114 face each other. Opening 114 is sealed by sealing plate 130. Joining portion 115 is formed at opening 114 so as to seal opening 114. Each of opening 114 and sealing plate 130 has a substantially rectangular shape in which the Y direction corresponds to its short-side direction and the Z direction corresponds to its long-side direction.

Sealing plate 130 (second sealing plate) is provided with a positive electrode terminal 302 and an injection hole 134. The positions of positive electrode terminal 302 and injection hole 134 can be appropriately changed.

Each of sealing plate 120 and sealing plate 130 is composed of a metal. Specifically, each of sealing plate 120 and sealing plate 130 is composed of aluminum, an aluminum alloy, iron, an iron alloy, or the like.

Negative electrode terminal 301 (first electrode terminal) is electrically connected to a negative electrode of electrode assembly 200. Negative electrode terminal 301 is attached to sealing plate 120, i.e., case 100.

Positive electrode terminal 302 (second electrode terminal) is electrically connected to a positive electrode of electrode assembly 200. Positive electrode terminal 302 is attached to sealing plate 130, i.e., case 100.

Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301.

Positive electrode terminal 302 is composed of a conductive material (more specifically, a metal), and can be composed of aluminum, an aluminum alloy, or the like, for example.

Injection hole 134 is sealed by a sealing member (not shown). As the sealing member, for example, a blind rivet or another metal member can be used.

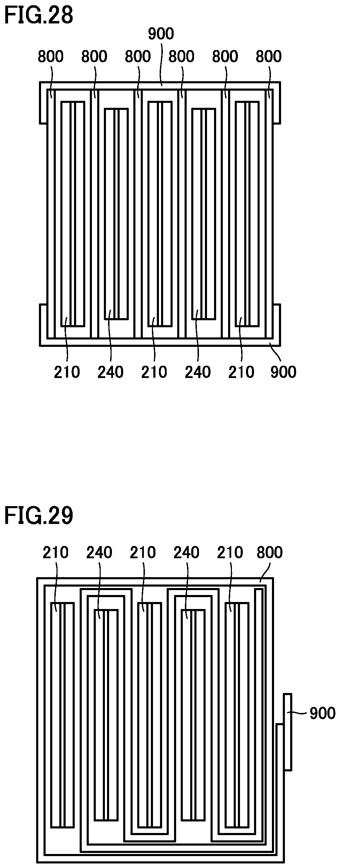

Electrode assembly 200 is an electrode assembly having a flat shape and having a below-described positive electrode plate and a below-described negative electrode plate stacked on each other. Specifically, electrode assembly 200 is a stacked type electrode assembly (see Fig. 29 below) in which a plurality of positive electrode plates and a plurality of negative electrode plates are alternately stacked with below-described separators 800 being interposed therebetween. However, in the present specification, the "electrode assembly" is not limited to the stacked type electrode assembly, and may be a wound type electrode assembly (see Fig. 31 below) in which a strip-shaped positive electrode plate and a strip-shaped negative electrode plate are wound together with a strip-shaped separator being interposed therebetween. The separator can be constituted of, for example, a microporous membrane composed of polyolefin. When the electrode assembly is the stacked type electrode assembly including the plurality of positive electrode plates and the plurality of negative electrode plates, positive electrode tabs provided on the positive electrode plates may be stacked to form a positive electrode tab group, and negative electrode tabs provided on the negative electrode plates may be stacked to form a negative electrode tab group.

As shown in Fig. 6, case 100 accommodates electrode assembly 200. Fig. 6 illustrates a first electrode assembly 201 described below. First electrode assembly 201 is accommodated in case 100 such that the long-side direction thereof is parallel to the X direction.

Specifically, one or a plurality of the stacked type electrode assemblies and an electrolyte solution (electrolyte) (not shown) are accommodated inside a below-described insulating sheet 700 disposed in case 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and dimethyl carbonate (DMC) at a volume ratio (25°C) of 30:30:40. It should be noted that instead of the electrolyte solution, a solid electrolyte may be used.

First electrode assembly 201 includes a main body portion having a substantially rectangular shape, a negative electrode tab group 220 (first electrode tab group), and a positive electrode tab group 250 (second electrode tab group).

The main body portion is constituted of a below-described negative electrode plate 210 and a below-described positive electrode plate 240. Negative electrode tab group 220 is located at an end portion of first electrode assembly 201 on the first side with respect to the main body portion thereof in the first direction (X direction). The first side in the present embodiment is the sealing plate 120 side. Positive electrode tab group 250 is located at an end portion of first electrode assembly 201 on the second side with respect to the main body portion thereof in the first direction (X direction). The second side in the present embodiment is the sealing plate 130 side.

Each of negative electrode tab group 220 and positive electrode tab group 250 is formed to protrude from a central portion of electrode assembly 200 toward sealing plate 120 or sealing plate 130.

Current collectors 400 include a negative electrode current collector 400A and a positive electrode current collector 400B. Each of negative electrode current collector 400A and positive electrode current collector 400B is constituted of a plate-shaped member. Electrode assembly 200 is electrically connected to negative electrode terminal 301 and positive electrode terminal 302 through current collectors 400.

Negative electrode current collector 400A is disposed on sealing plate 120 with an insulating member composed of a resin being interposed therebetween. Negative electrode current collector 400A is electrically connected to negative electrode tab group 220 and negative electrode terminal 301. Negative electrode current collector 400A is composed of a conductive material (more specifically, a metal), and can be composed of copper, a copper alloy, or the like, for example. It should be noted that details of negative electrode current collector 400A will be described later.

Positive electrode current collector 400B is disposed on sealing plate 130 with an insulating member composed of a resin being interposed therebetween. Positive electrode current collector 400B is electrically connected to positive electrode tab group 250 and positive electrode terminal 302. Positive electrode current collector 400B is composed of a conductive material (more specifically, a metal), and can be composed of aluminum, an aluminum alloy, or the like, for example. It should be noted that positive electrode tab group 250 may be electrically connected to sealing plate 130 directly or via positive electrode current collector 400B. In this case, sealing plate 130 may serve as positive electrode terminal 302. Moreover, details of positive electrode current collector 400B will be described later.

### (Configuration of Electrode Assembly 200)

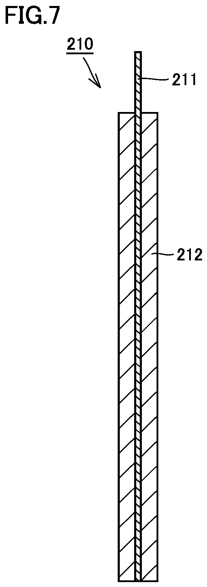

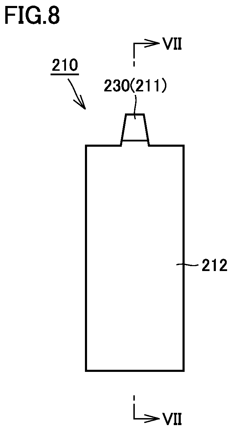

Fig. 7 is a cross sectional view of negative electrode plate 210 (cross sectional view along VII-VII in Fig. 8), and Fig. 8 is a front view showing negative electrode plate 210.

As shown in Fig. 8, a negative electrode tab 230 (first electrode tab) constituted of a negative electrode core body 211 is provided at one end portion, in the width direction, of negative electrode plate 210. When negative electrode plates 210 are stacked, a plurality of negative electrode tabs 230 are stacked to form negative electrode tab group 220. The length of each of the plurality of negative electrode tabs 230 in the plurality of negative electrode plates 210 in the protruding direction is appropriately adjusted in consideration of the state in which negative electrode tab group 220 is connected to negative electrode current collector 400A. It should be noted that the shape of negative electrode tab 230 is not limited to the one illustrated in Fig. 7.

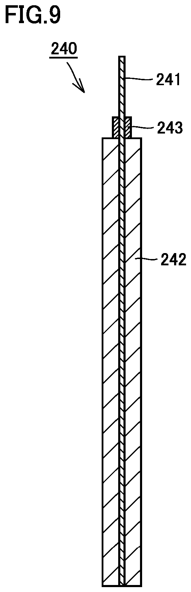

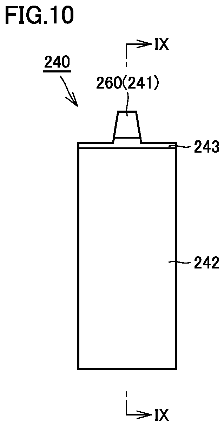

Fig. 9 is a cross sectional view of positive electrode plate 240 (cross sectional view along IX-IX in Fig. 10), and Fig. 10 is a front view showing positive electrode plate 240.

As shown in Fig. 10, a positive electrode tab 260 (second electrode tab) constituted of a positive electrode core body 241 is provided at one end portion, in the width direction, of positive electrode plate 240 formed. When positive electrode plates 240 are stacked, a plurality of positive electrode tabs 260 are stacked to form positive electrode tab group 250. The length of each of positive electrode tabs 260 in the plurality of positive electrode plates 240 in the protruding direction is appropriately adjusted in consideration of the state in which positive electrode tab group 250 is connected to positive electrode current collector 400B. It should be noted that the shape of positive electrode tab 260 is not limited to the one illustrated in Fig. 10.

A positive electrode protective layer 243 is provided at the root of positive electrode tab 260. Positive electrode protective layer 243 may not necessarily be provided at the root of positive electrode tab 260.

In a typical example, the thickness of (one) negative electrode tab 230 is smaller than the thickness of (one) positive electrode tab 260. In this case, the thickness of negative electrode tab group 220 is smaller than the thickness of positive electrode tab group 250.

### (Connection Structure between Electrode Assembly 200 and Current Collector 400)

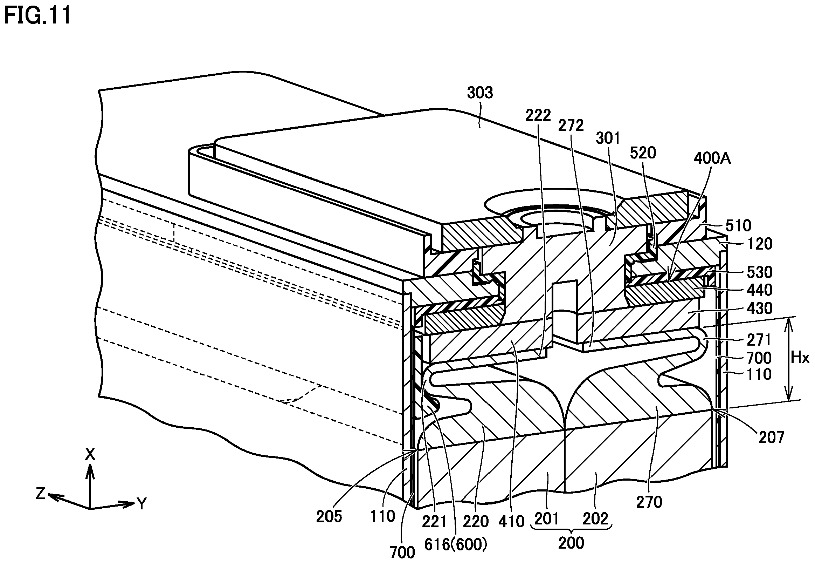

Fig. 11 is a cross sectional view of the secondary battery shown in Fig. 1 along XI-XI. As shown in Fig. 11, electrode assembly 200 includes first electrode assembly 201 and a second electrode assembly 202. Each of first electrode assembly 201 and second electrode assembly 202 includes a positive electrode (second electrode) and a negative electrode (first electrode). It should be noted that electrode assembly 200 may be constituted of three or more electrode assemblies.

Electrode assembly 200 is formed by overlapping first electrode assembly 201 and second electrode assembly 202 with each other. First electrode assembly 201 and second electrode assembly 202 are arranged side by side in the thickness direction (Y direction) of each of first electrode assembly 201 and second electrode assembly 202.

First electrode assembly 201 includes negative electrode tab group 220. Negative electrode tab group 220 is electrically connected to a current collector 410 (negative electrode current collector) at its first end portion 205 in the X direction. Second electrode assembly 202 includes a negative electrode tab group 270. Negative electrode tab group 270 is electrically connected to a current collector 430 (negative electrode current collector) at its third end portion 207 in the X direction.

Negative electrode tab group 220 has a curved portion 221 and a tip portion 222. Curved portion 221 is a portion at which negative electrode tab group 220 is curved on the side, on which the first electrode is connected, with respect to tip portion 222. Tip portion 222 is a portion located at an end portion of negative electrode tab group 220 on the side opposite to the side on which the first electrode is connected.

Negative electrode tab group 270 has a curved portion 271 and a tip portion 272. Curved portion 271 is a portion at which negative electrode tab group 270 is curved on the side, on which the first electrode is connected, with respect to tip portion 272. Tip portion 272 is a portion located at an end portion of negative electrode tab group 270 on the side opposite to the side on which the first electrode is connected.

Negative electrode tab group 220 and negative electrode tab group 270 are curved in opposite directions such that tip portions 222, 272 are close to each other. It should be noted that tip portions 222, 272 are separated from each other in the present embodiment; however, it is not limited to this configuration, and tip portions 222, 272 may be in contact with each other.

Negative electrode current collector 400A electrically connects negative electrode terminal 301 to negative electrode tab group 220 and negative electrode tab group 270. Negative electrode current collector 400A in the present embodiment is connected to negative electrode terminal 301 between electrode assembly 200 and sealing plate 120.

Negative electrode current collector 400A includes current collector 410, current collector 430 (third current collecting member), and a current collector 440 (fourth current collecting member).

Current collector 410 is a plate-shaped member. Current collector 410 has a long-side direction in the Z direction and a short-side direction in the Y direction. Current collector 430 is a plate-shaped member. Current collector 430 has a long-side direction in the Z direction and a short-side direction in the Y direction. Current collector 410 and current collector 430 are arranged side by side in parallel in the X direction. In this way, current collector 410 and current collector 430 are constituted of separate components.

Negative electrode tab group 220 is joined to current collector 410 at a joining location 411 described later. Negative electrode tab group 270 is joined to current collector 430 at a joining location 431 described later. Joining locations 411, 431 can be formed by, for example, ultrasonic welding, resistance welding, laser welding, swaging, or the like. In the present embodiment, negative electrode tab group 220 and current collector 410 are joined by ultrasonic joining, and negative electrode tab group 270 and current collector 430 are joined by ultrasonic joining, for example.

Current collector 440 is joined to each of current collector 410 and current collector 430 at a joining location (not shown) located at its end portion in the Z direction. Current collector 440 is connected to negative electrode terminal 301. The connection between current collector 440 and negative electrode terminal 301 can be formed by swaging and/or welding, for example.

Negative electrode terminal 301 is provided to be exposed to the outside of sealing plate 120 and reach current collector 440 of negative electrode current collector 400A provided on the inner surface side of sealing plate 120. Negative electrode terminal 301 is connected to a plate-shaped member 303.

Plate-shaped member 303 is located on the outer side with respect to sealing plate 120. Plate-shaped member 303 is disposed along sealing plate 120. Plate-shaped member 303 has electric conductivity. Plate-shaped member 303 is disposed to secure an area of connection with a bus bar or the like that electrically connects secondary battery 1 and another secondary battery adjacent thereto. The connection between negative electrode terminal 301 and plate-shaped member 303 can be formed by, for example, laser welding or the like.

An insulating member 510 is disposed between plate-shaped member 303 and sealing plate 120. An insulating member 520 is disposed between negative electrode terminal 301 and sealing plate 120. An insulating member 530 is disposed between current collector 440 and sealing plate 120.

It should be noted that negative electrode terminal 301 may be electrically connected to sealing plate 120. Further, sealing plate 120 may function as negative electrode terminal 301.

A below-described spacer 600 (first spacer) is disposed between sealing plate 120 and the main body portion (negative electrode tab group 220 is not included) of electrode assembly 200. Spacer 600 is composed of a resin member having an insulating property.

Although a detailed structure of spacer 600 will be described later, spacer 600 is provided with a protrusion 616 protruding in the Y direction. With this protrusion 616 of spacer 600, spacer 600 functions as a guide to facilitate curving of curved portions 221, 271 when forming curved portions 221, 271.

Insulating sheet 700 (electrode assembly holder) composed of a resin is disposed between electrode assembly 200 and case main body 110. Insulating sheet 700 may be composed of, for example, a resin. More specifically, the material of insulating sheet 700 is, for example, polypropylene (PP), polyethylene terephthalate (PET), polyphenylene sulfide (PPS), polyimide (PI), or polyolefin (PO).

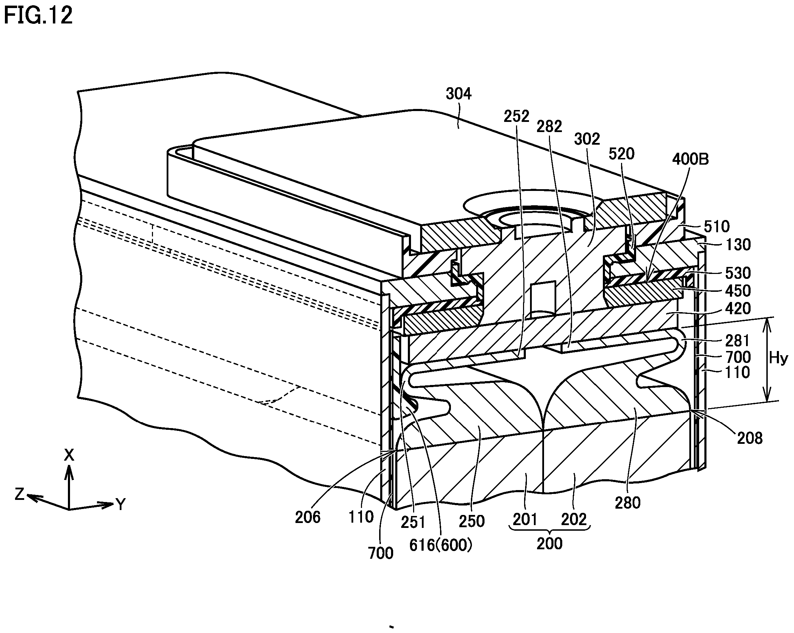

Fig. 12 is a cross sectional view of the secondary battery shown in Fig. 1 along XII-XII. The connection structure between electrode assembly 200 and current collector 400 on the positive electrode side of secondary battery 1 according to the present embodiment is different from that of the configuration on the negative electrode side in the following point: a portion corresponding to current collector 410 and current collector 430 on the negative electrode side is constituted of a single component.

First electrode assembly 201 includes positive electrode tab group 250. Positive electrode tab group 250 is electrically connected to a current collector 420 (positive electrode current collector) at its second end portion 206 in the X direction. Second electrode assembly 202 includes a positive electrode tab group 280. Positive electrode tab group 280 is electrically connected to current collector 420 (positive electrode current collector) at its fourth end portion 208 in the X direction.

Positive electrode tab group 250 has a curved portion 251 and a tip portion 252. Curved portion 251 is a portion at which positive electrode tab group 250 is curved on the side, on which the second electrode is connected, with respect to tip portion 252. Tip portion 252 is a portion located at an end portion of positive electrode tab group 250 on the side opposite to the side on which the second electrode is connected.

Positive electrode tab group 280 has a curved portion 281 and a tip portion 282. Curved portion 281 is a portion at which positive electrode tab group 280 is curved on the side, on which the second electrode is connected, with respect to tip portion 282. Tip portion 282 is a portion located at an end portion of positive electrode tab group 280 on the side opposite to the side on which the second electrode is connected.

Positive electrode tab group 250 and positive electrode tab group 280 are curved in opposite directions such that tip portions 252, 282 are close to each other. It should be noted that tip portions 252, 282 are separated from each other in the present embodiment; however, it is not limited to this configuration, and tip portions 252, 282 may be in contact with each other.

Positive electrode current collector 400B electrically connects positive electrode terminal 302 to positive electrode tab group 250 and positive electrode tab group 280. Positive electrode current collector 400B in the present embodiment is connected to positive electrode terminal 302 between electrode assembly 200 and sealing plate 130.

Positive electrode current collector 400B includes current collector 420 (first current collecting member) and a current collector 450 (second current collecting member).

Current collector 420 is a plate-shaped member. Current collector 420 has a long-side direction in the Z direction and a short-side direction in the Y direction. Current collector 420 is constituted of a single component in one piece.

Positive electrode tab group 250 and positive electrode tab group 280 are joined, at below-described joining locations 421, to current collector 420 constituted of the single component. Each of joining locations 421 may be formed by ultrasonic welding, resistance welding, laser welding, swaging, or the like, for example. In the present embodiment, positive electrode tab group 250 and positive electrode tab group 280 are joined to current collector 420 by ultrasonic joining, for example.

Current collector 450 is joined to current collector 420 at a joining location (not shown) located at its end portion in the Z direction. Current collector 450 is connected to positive electrode terminal 302. The connection between current collector 450 and positive electrode terminal 302 may be formed by swaging and/or welding, for example.

Positive electrode terminal 302 is provided to be exposed to the outside of sealing plate 130 and reach current collector 450 of positive electrode current collector 400B provided on the inner surface side of sealing plate 130. Positive electrode terminal 302 is connected to a plate-shaped member 304.

Plate-shaped member 304 is located on the outer side with respect to sealing plate 130. Plate-shaped member 304 is disposed along sealing plate 130. Plate-shaped member 304 has electric conductivity. Plate-shaped member 304 is disposed to secure an area of connection with a bus bar or the like that electrically connects secondary battery 1 and another secondary battery adjacent thereto. The connection between positive electrode terminal 302 and plate-shaped member 304 may be formed by, for example, laser welding or the like.

An insulating member 510 is disposed between plate-shaped member 304 and sealing plate 130. An insulating member 520 is disposed between positive electrode terminal 302 and sealing plate 130. An insulating member 530 is disposed between current collector 450 and sealing plate 130.

It should be noted that positive electrode terminal 302 may be electrically connected to sealing plate 130. Further, sealing plate 130 may function as positive electrode terminal 302.

A spacer 600 (second spacer) is disposed between sealing plate 130 and the main body portion (positive electrode tab groups 250, 280 are not included) of electrode assembly 200. Spacer 600 is composed of a resin member having an insulating property.

Although a detailed structure of spacer 600 will be described later, spacer 600 is provided with a protrusion 616 protruding in the Y direction. With this protrusion 616 of spacer 600, spacer 600 functions as a guide to facilitate curving of curved portions 251, 281 when forming curved portions 251, 281.

Insulating sheet 700 (electrode assembly holder) composed of a resin as described above is disposed between electrode assembly 200 and case main body 110.

### (Manufacturing Process for Secondary Battery 1)

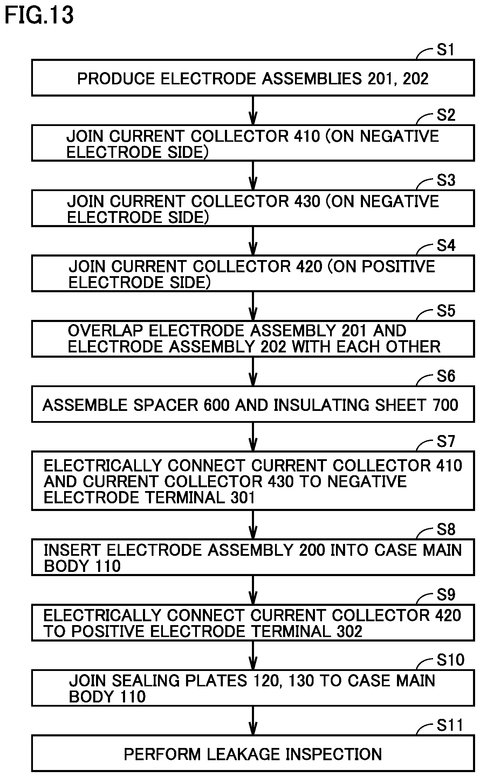

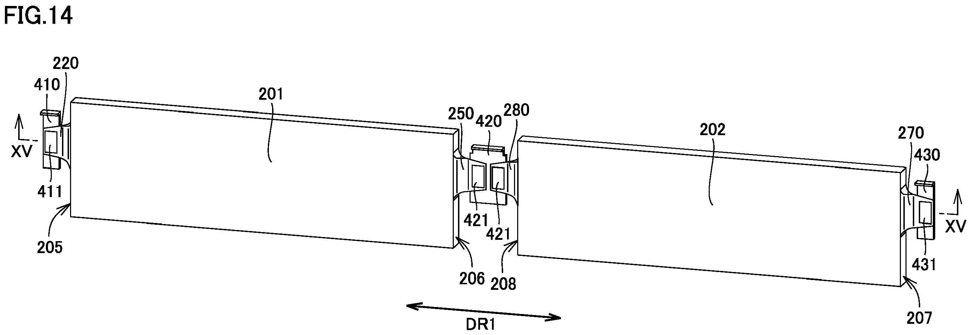

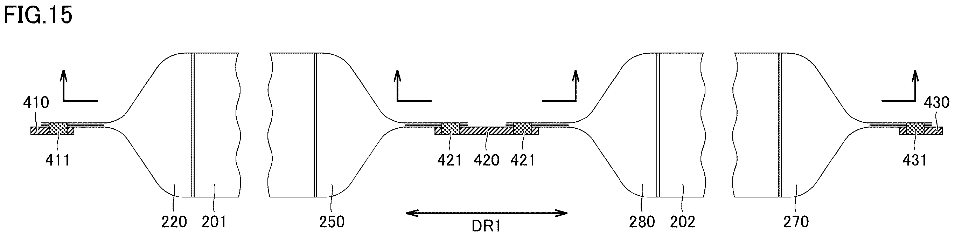

Hereinafter, a method of manufacturing the secondary battery according to the present embodiment will be described. Fig. 13 is a flowchart showing a method of manufacturing the secondary battery according to the first embodiment. Fig. 14 is a perspective view showing a state before two electrode assemblies included in the secondary battery according to the first embodiment are overlapped with each other. Fig. 15 is a cross sectional view of each of the electrode assemblies and the current collectors shown in Fig. 14 along XV-XV.

As shown in Fig. 13, in the method of manufacturing the secondary battery according to the present embodiment, first, first electrode assembly 201 and second electrode assembly 202 are produced (step S1). Parts of the tips of negative electrode tab group 220, positive electrode tab group 250, negative electrode tab group 270, and positive electrode tab group 280 are cut such that they have the same tip length when bundled.

As shown in Figs. 13 to 15, after producing first electrode assembly 201 and second electrode assembly 202, negative electrode tab group 220 is joined to current collector 410 (step S2). Negative electrode tab group 220 is joined to current collector 410 at joining location 411. Next, negative electrode tab group 270 is joined to current collector 430 (step S3). Negative electrode tab group 270 is joined to current collector 430 at joining location 431.

Next, first electrode assembly 201, current collector 420, and second electrode assembly 202 are disposed side by side in this order in the first direction (DR1 direction). Positive electrode tab group 250 is disposed on one side with respect to current collector 420 in the first direction (DR1 direction). Positive electrode tab group 250 and positive electrode tab group 280 are joined to current collector 420 with positive electrode tab group 280 being disposed on the other side with respect to current collector 420 in the first direction (DR1 direction) (step S4). Positive electrode tab group 250 and positive electrode tab group 280 are joined to current collector 420 at joining locations 421.

In the height direction of each of first electrode assembly 201 and second electrode assembly 202, each of current collector 410, current collector 420 and current collector 430 is disposed on one side with respect to the center of each of first electrode assembly 201 and second electrode assembly 202. Thus, each of the current collectors can be formed to be short, thereby reducing the size of the current collector.

It should be noted that each of current collector 410, current collector 420, and current collector 430 is not limited to this configuration. In the height direction of each of first electrode assembly 201 and second electrode assembly 202, each of current collector 410, current collector 420, and current collector 430 may be disposed at the center of a corresponding one of first electrode assembly 201 and second electrode assembly 202. In this case, in the height direction of each of first electrode assembly 201 and second electrode assembly 202, each of negative electrode tab group 220, positive electrode tab group 250, negative electrode tab group 270, and positive electrode tab group 280 is disposed at the center of a corresponding one of first electrode assembly 201 and second electrode assembly 202 so as to correspond to a corresponding one of current collector 410, current collector 420, and current collector 430.

Further, the order of the steps of joining current collector 410, current collector 420 and current collector 430 to first electrode assembly 201 and second electrode assembly 202 is not limited to the one described above, and the order may be changed. Each of the respective steps of joining current collector 410 and current collector 430 to first electrode assembly 201 and second electrode assembly 202 is preferably performed before the below-described step of overlapping first electrode assembly 201 and second electrode assembly 202 with each other, and is preferably performed before the step of joining current collector 420 to first electrode assembly 201 and second electrode assembly 202.

Next, after joining positive electrode tab group 250 and positive electrode tab group 280 to current collector 420, positive electrode tab group 250 and positive electrode tab group 280 are bent in the thickness direction (direction orthogonal to the DR1 direction in Figs. 14 and 15) of each of first electrode assembly 201 and second electrode assembly 202, thereby overlapping first electrode assembly 201 and second electrode assembly 202 with each other (step S5). That is, first electrode assembly 201 and second electrode assembly 202 are collected together.

Regarding the expression "overlapping the first electrode assembly and the second electrode assembly with each other", the first electrode assembly and the second electrode assembly may be overlapped with each other directly, or another member may be disposed between the first electrode assembly and the second electrode assembly. Further, the first electrode assembly and the second electrode assembly may or may not be fixed by a tape or the like. Further, the first electrode assembly, the current collector, and the second electrode assembly may not be disposed on a straight line in the first direction (DR1 direction), and the first electrode assembly or the second electrode assembly may be inclined with respect to the current collector in the first direction (DR1 direction).

Positive electrode tab group 250 and positive electrode tab group 280 are folded such that tip portions thereof face each other. Similarly, negative electrode tab group 220 and negative electrode tab group 270 are also folded such that tip portions thereof face each other.

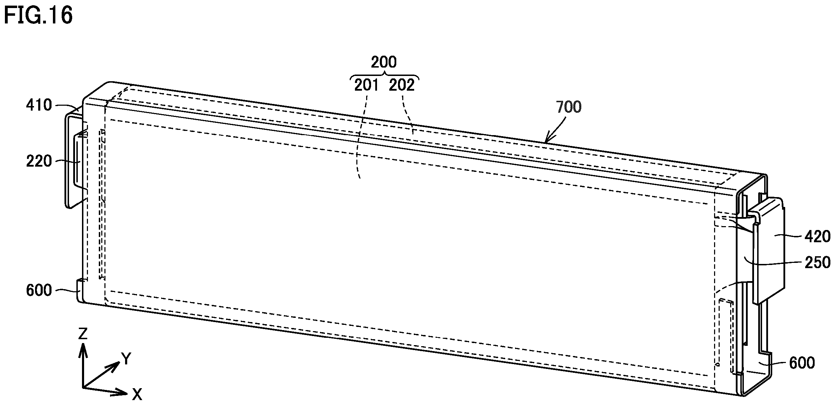

Each of Figs. 13 and 16 is a perspective view showing a state of attaching the holder and the spacer to the electrode assembly. As shown in Fig. 16, next, spacer 600 and insulating sheet 700 are assembled to electrode assembly 200 (step S6).

It should be noted that insulating sheet 700 does not necessarily need to cover a whole of the surfaces of electrode assembly 200. Insulating sheet 700 preferably covers an area of about 50% or more, more preferably about 70% or more, of the outer surfaces of the electrode assembly. Insulating sheet 700 preferably covers a whole of at least four surfaces of the six surfaces of electrode assembly 200 having a substantially rectangular parallelepiped shape (flat shape) other than the two surfaces thereof on which negative electrode tab group 220 and positive electrode tab group 250 are formed respectively.

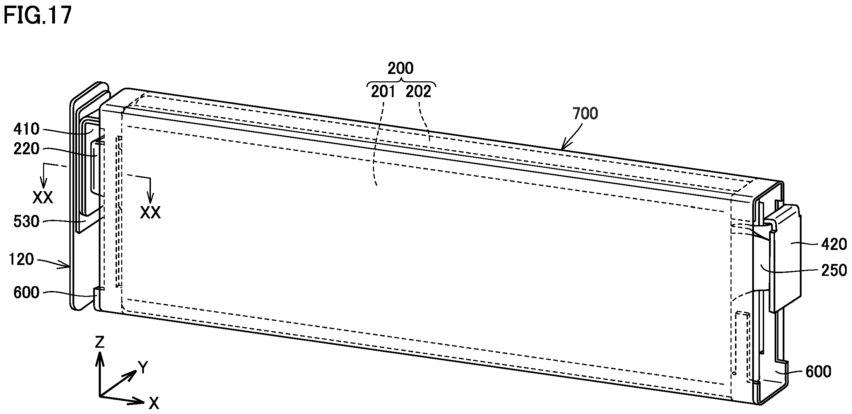

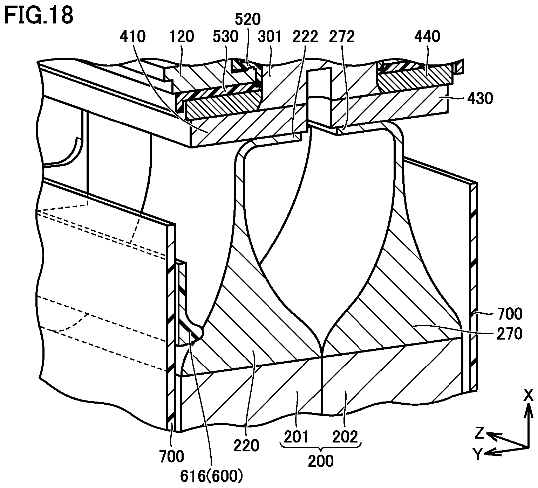

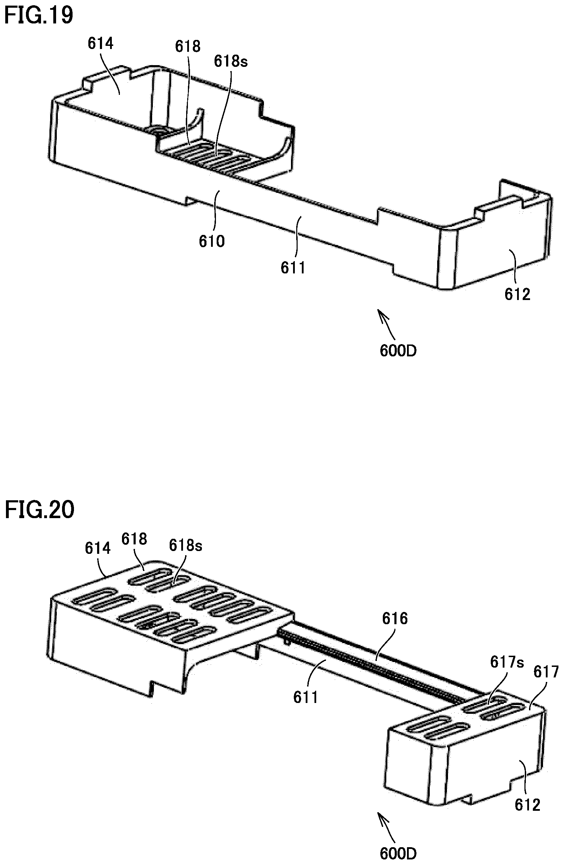

Fig. 17 is a perspective view showing a state of attaching sealing plate 120 to the current collectors on the negative electrode side. Fig. 18 is a cross sectional view of each of the electrode assemblies and the current collectors shown in Fig. 17 along XVIII-XVIII. Figs. 19 and 20 are first and second perspective views each showing an implementation of spacer 600.

As shown in Figs. 19 and 20, spacer 600 is composed of a resin member having an insulating property. Spacer 600 includes: a first component 612 and a second component 614 each having three surrounding side walls; and a coupling wall 611 that couples one side wall of first component 612 and one side wall of second component 614 to each other. Protrusion 616 is provided on an inner side of coupling wall 611 so as to extend between first component 612 and second component 614 (in the Z direction).

First component 612 includes a first plate portion 617 provided to couple the three walls. First plate portion 617 is provided with a plurality of first through holes 617s each having an elliptical shape. The shape of each first through hole 617s and the number of first through holes 617s are appropriately selected, and are not limited to the shape and number shown.

Second component 614 includes a second plate portion 618 provided to couple the three walls. Second plate portion 618 is provided with a plurality of second through holes 618s each having an elliptical shape. The shape of each second through hole 618s and the number of second through holes 618s are appropriately selected, and are not limited to the shape and number shown.

Each of first plate portion 617 and second plate portion 618 described above is located on an end surface side of the electrode assembly. Each of these plate portions may be in abutment with the end surface of the electrode assembly, or when each of these plate portions is not in abutment with the end surface, the shortest distance therebetween is preferably 2 mm or less, and is more preferably 1 mm or less. Further, since first through hole 617s and second through hole 618s are provided, when secondary battery 1 shown in Fig. 1 is placed with the Z direction corresponding to the upward direction (such a direction that opening 113 (first opening) and opening 114 (second opening) at the both ends of case main body 110 are arranged on the left and right), even if the electrolyte solution pushed out from the electrode assembly flows to outside of the through holes during charging (generally, the electrode plate is expanded), the electrolyte solution can be readily returned to inside of the electrode assembly during discharging (generally, the electrode plate is contracted).

As shown in Figs. 13, 17, and 18, current collector 410 and current collector 430 are electrically connected to negative electrode terminal 301 via current collector 440 after joining negative electrode tab group 220 to current collector 410, joining negative electrode tab group 270 to current collector 430, and overlapping first electrode assembly 201 and second electrode assembly 202 with each other (step S7). It should be noted that step S7 can be performed before step S6.

Specifically, negative electrode tab group 220 and negative electrode tab group 270 are folded such that tip portions 222, 272 face each other.

Each of negative electrode terminal 301 and current collector 440 is attached to sealing plate 120 with an insulating member being interposed therebetween. Current collector 440 is brought into abutment with current collector 410 and current collector 430 in the X direction. It should be noted that the connecting of plate-shaped member 303 to negative electrode terminal 301 may be performed at any timing. Current collector 440 is joined to current collector 410 and current collector 430 by laser welding from between sealing plate 120 and insulating sheet 700.

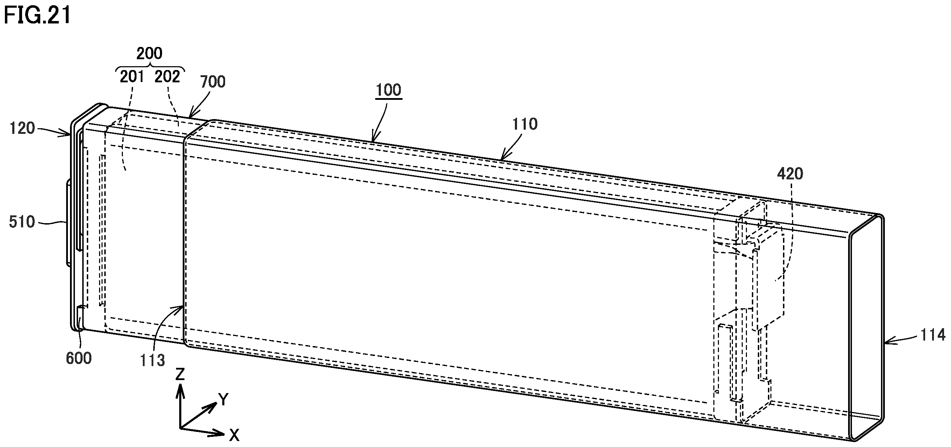

Fig. 21 is a perspective view showing a state of inserting the electrode assemblies into the case main body. As shown in Figs. 13 and 21, next, after overlapping first electrode assembly 201 and second electrode assembly 202 with each other, first electrode assembly 201 and second electrode assembly 202 are inserted into case main body 110 via opening 113 with the current collector 420 side being inserted first (step S8). On this occasion, at each of the end portions of first electrode assembly 201 and second electrode assembly 202 on the negative electrode tab 230 side, first electrode assembly 201 and second electrode assembly 202 are inserted into case main body 110 with negative electrode active material layer 212 protruding to the negative electrode tab 230 side with respect to the end portion of positive electrode active material layer 242, and details thereof will be described later.

Negative electrode tab group 220 and negative electrode tab group 270 are curved by bringing sealing plate 120 close to the main body portion of electrode assembly 200 (first electrode assembly 201 and second electrode assembly 202). It should be noted that sealing plate 120 and case main body 110 are preferably brought close to each other by bringing sealing plate 120 close to the main body portion of electrode assembly 200 disposed in case main body 110. As shown in Fig. 11, negative electrode tab group 220 and negative electrode tab group 270 are curved along the shape of spacer 600 such that the folded portions of curved portions 221, 271 are close to case main body 110 in the Y direction.

After bringing sealing plate 120 into abutment with case main body 110, sealing plate 120 is temporarily joined to case main body 110. By the temporary joining, sealing plate 120 is partially joined to opening 113 of case main body 110. Thus, sealing plate 120 is positioned with respect to case main body 110.

When inserting electrode assembly 200 into case main body 110, electrode assembly 200 may be pulled from the current collector 420 side, or may be pushed from each of the current collector 410 side and the current collector 430 side. When electrode assembly 200 is pressed from each of the current collector 410 side and the current collector 430 side, negative electrode tab group 220 and negative electrode tab group 270 can be curved at the same time.

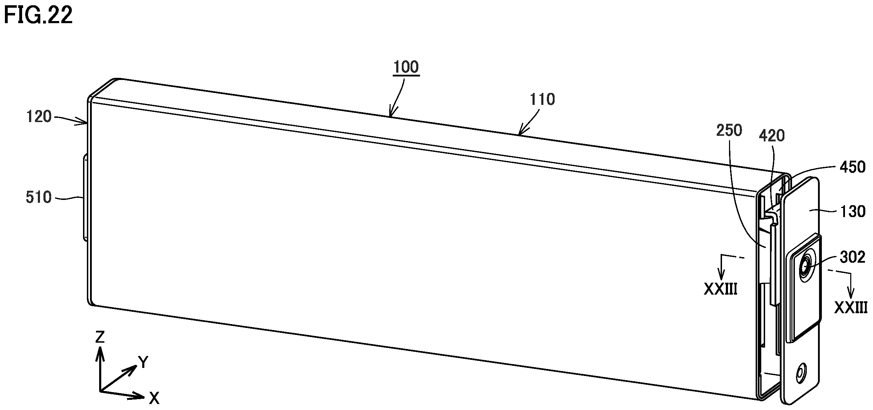

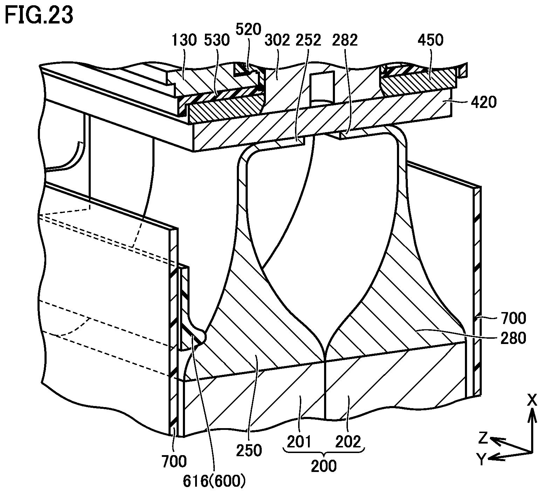

Fig. 22 is a perspective view showing a state of attaching sealing plate 130 to the current collectors on the positive electrode side. Fig. 23 is a cross sectional view of each of the electrode assemblies and the current collectors shown in Fig. 22 along XXIII-XXIII. It should be noted that in Fig. 23, case main body 110 is not shown.

As shown in Figs. 13, 21 and 22, current collector 420 is electrically connected to positive electrode terminal 302 after inserting first electrode assembly 201 and second electrode assembly 202 into case main body 110 (step S9).

Specifically, each of positive electrode terminal 302 and current collector 450 is attached to sealing plate 130 with an insulating member being interposed therebetween. After inserting first electrode assembly 201 and second electrode assembly 202 into case main body 110, current collector 450 is brought into abutment, in the X direction, with current collector 420 protruding from opening 114. It should be noted that the connecting of plate-shaped portion 304 to positive electrode terminal 302 may be performed at any timing.

As shown in Fig. 23, positive electrode tab group 250 and positive electrode tab group 280 connected to current collector 420 are folded such that tip portions 252, 282 face each other. From the state shown in Fig. 23, sealing plate 130 is brought into abutment with case main body 110. On this occasion, positive electrode tab group 250 and positive electrode tab group 280 are curved by bringing sealing plate 130 and the main body portion of electrode assembly 200 close to each other. As shown in Fig. 12, positive electrode tab group 250 and positive electrode tab group 280 are curved along the shape of spacer 600 such that the folded portions of curved portions 251, 281 are close to case main body 110 in the Y direction.

After sealing plate 130 is brought into abutment with case main body 110, sealing plate 130 is temporarily welded to case main body 110. By the temporary joining, sealing plate 130 is partially joined to opening 114 of case main body 110. Thus, sealing plate 130 is positioned with respect to case main body 110.

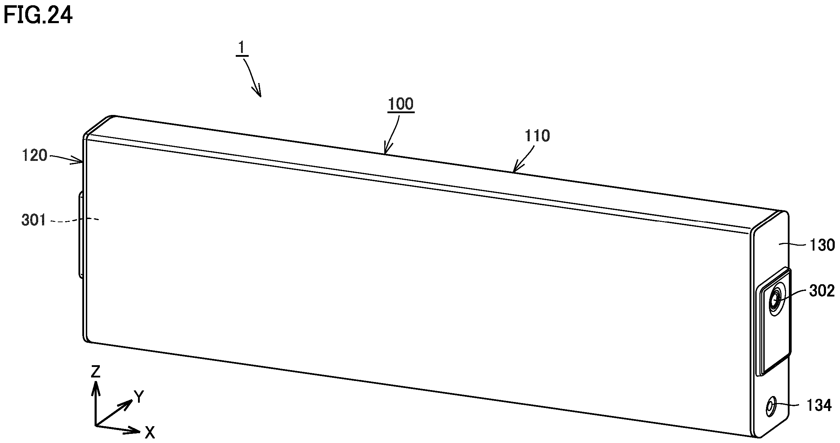

Fig. 24 is a perspective view showing the configuration of secondary battery 1. As shown in Figs. 13 and 24, next, sealing plate 120 and sealing plate 130 are joined to case main body 110 (step S10). Sealing plate 120 seals opening 113 of case main body 110, and sealing plate 130 seals opening 114 of case main body 110. Thus, first electrode assembly 201 and second electrode assembly 202 are accommodated in case 100.

After the above-described steps, an inspection such as a leakage inspection is performed (step S11). After the leakage inspection, secondary battery 1 is dried to remove moisture in case 100. Then, the electrolyte solution is injected into case 100 through injection hole 134. When injecting the electrolyte solution, case 100 is inclined with sealing plate 130 facing upward and sealing plate 120 facing downward, thereby injecting the electrolyte solution into case 100 via injection hole 134 of sealing plate 130. Thereafter, charging is performed to result in release of gas. For performing the charging to result in release of gas, injection hole 134 may be temporarily sealed. Thereafter, injection hole 134 is sealed, thereby completing secondary battery 1.

It should be noted that the order of the step of inserting electrode assembly 200 and the step of connecting the current collectors is not limited to the above-described example. For example, after only a portion of electrode assembly 200 is inserted into case main body 110 with the end portion of negative electrode active material layer 212 (second electrode active material layer) on the opening 113 side being disposed outside case main body 110 (first step), negative electrode terminal 301 (first electrode terminal) provided on sealing plate 120 (first sealing plate) and negative electrode tab groups 220, 270 (first electrode tab) may be electrically connected to each other, and then electrode assembly 200 may be inserted into case main body 110 until the end portion of negative electrode active material layer 212 on the opening 113 side is disposed inside case main body 110 (second step). That is, negative electrode terminal 301 and electrode assembly 200 can be electrically connected to each other during the step of inserting electrode assembly 200 into case main body 110.

In the present embodiment, since first electrode assembly 201 is provided with negative electrode tab group 220 and positive electrode tab group 250 and second electrode assembly 202 is provided with negative electrode tab group 270 and positive electrode tab group 280, first electrode assembly 201 and second electrode assembly 202 can be configured to have separate electrode tabs. With this configuration, the electrode tabs can be shortened as compared with a case where one collective electrode tab is formed by first electrode assembly 201 and second electrode assembly 202 and the electrode tab is bent. As a result, the occupied volume of the electrode tabs can be reduced, thereby improving the energy density of secondary battery 1. Further, in the configuration in which the separate electrode tabs are respectively provided for first electrode assembly 201 and second electrode assembly 202, the electrode tabs are readily bent and the electrode tabs and the current collectors can be therefore readily joined as compared with the case where one collective electrode tab is formed by first electrode assembly 201 and second electrode assembly 202, with the result that the secondary battery can be stably manufactured. In particular, since secondary battery 1 can be stably manufactured, reliability of the connection portion between each of the electrode tabs and each of the current collectors can be increased.

### (Structure of End Portion of Electrode Assembly 200)

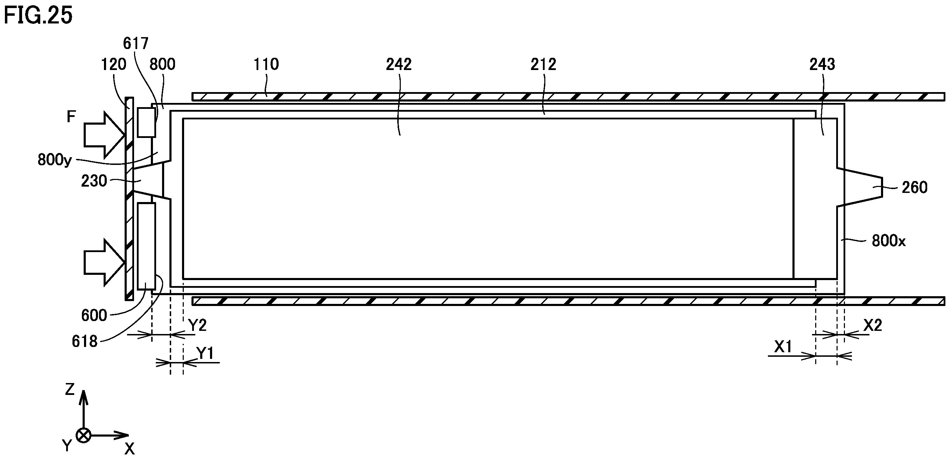

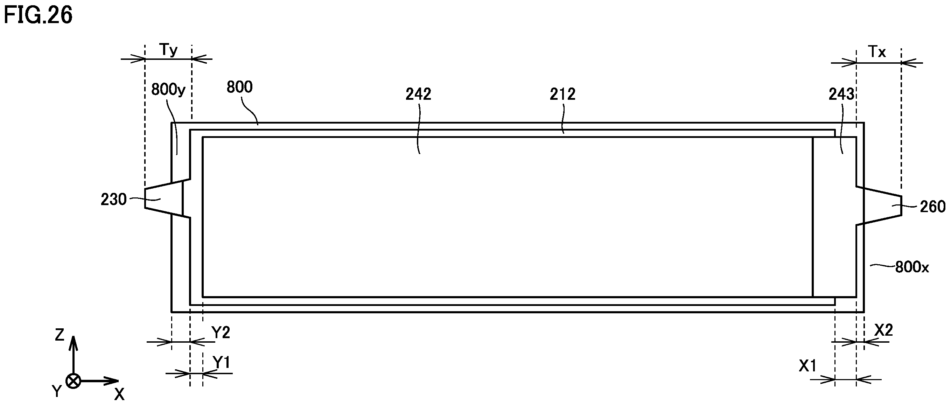

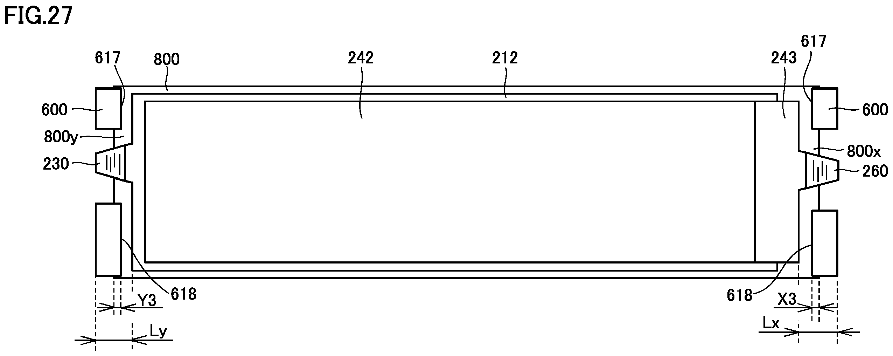

A structure of each end portion of electrode assembly 200 will be described with reference to Figs. 25 to 27. Fig. 25 is a cross sectional view taken along a plane including the Z axis with the electrode assembly being inserted in the case main body, Fig. 26 is a cross sectional view taken along the plane including the Z axis and showing a schematic configuration of electrode assembly 200 after stacking, and Fig. 27 is a cross sectional view taken along the plane including the Z axis and showing a schematic configuration of electrode assembly 200 after the secondary battery is completed. It should be noted that for convenience of description, in each of Figs. 25 to 27, the current collectors, the case main body, and the sealing plates are not shown as appropriate.

Referring to Fig. 25, at the end portion of the main body portion of electrode assembly 200 on the positive electrode tab 260 side, positive electrode protective layer 243 is provided to protrude to the positive electrode tab 260 side with respect to the end portion of negative electrode active material layer 212 (X1 in the figure), and at the end portion of the main body portion of electrode assembly 200 on the negative electrode tab 230 side, negative electrode active material layer 212 is provided to protrude to the negative electrode tab 230 side with respect to the end portion of positive electrode active material layer 242 (Y1 in the figure).

At the end portion of separator 800 on the positive electrode tab 260 side, separator 800 has a positive-electrode-side protruding region 800x (its protruding length is represented by X2 in the figure) protruding to the positive electrode tab 260 side with respect to the end portion of positive electrode protective layer 243, and at the end portion of separator 800 on the negative electrode tab 230 side, separator 800 has a negative-electrode-side protruding region 800y (its protruding length is represented by Y2 in the figure) protruding to the negative electrode tab 230 side with respect to the end portion of negative electrode active material layer 212. The protruding length (Y2) of negative-electrode-side protruding region 800y is provided to be larger than the protruding length (X2) of positive-electrode-side protruding region 800x (Y2>X2).

In the state of inserting the electrode assembly into the case main body shown in Fig. 21, electrode assembly 200 is pushed into case main body 110 by external force F applied to sealing plate 120 while first plate portion 617 and second plate portion 618 of spacer 600 are in abutment with the end surface of the electrode assembly, more specifically, are in abutment with negative-electrode-side protruding region 800y. On this occasion, electrode assembly 200 is pushed into case main body 110 in a state in which at least portions of the regions of negative-electrode-side protruding region 800y in abutment with spacer 600 are crushed and the region of negative-electrode-side protruding region 800y not in abutment with spacer 600 remains unchanged.

Here, a specific dimensional relation of electrode assembly 200 before being inserted into the case main body will be described with reference to Fig. 26. On the positive electrode tab 260 side, protruding length X1 of positive electrode protective layer 243 with respect to negative electrode active material layer 212 is about 1.0 mm. Protruding length X2 of positive-electrode-side protruding region 800x of separator 800 is about 2.5 mm. It should be noted that protruding length X2 of positive-electrode-side protruding region 800x may be 2 mm or more.

On the negative electrode tab 230 side, protruding length Y2 of negative-electrode-side protruding region 800y is about 3.0 mm. It should be noted that protruding length Y2 of negative-electrode-side protruding region 800y may be 2 mm or more.

It should be noted that a protrusion allowance dimension Tx of positive electrode tab 260 from the end portion of positive electrode protective layer 243 and a protrusion allowance dimension Ty of negative electrode tab 230 from the end portion of negative electrode active material layer 212 before electrode assembly 200 is inserted into the case main body are provided to be substantially the same.

Next, a specific dimensional relation of electrode assembly 200 after being inserted into the case main body will be described with reference to Fig. 27. After electrode assembly 200 is inserted into the case main body, the configuration on the negative electrode tab 230 side is in the state shown in Fig. 11, and the configuration on the positive electrode tab 260 side is in the state shown in Fig. 12.

On the positive electrode tab 260 side, positive-electrode-side protruding region 800x of separator 800 is in a state in which the regions thereof in abutment with first plate portion 617 and second plate portion 618 of spacer 600 are crushed. In this case, a length (X3 in the figure) by which positive-electrode-side protruding region 800x is crushed is less than about 1.5 mm. Therefore, the width of positive-electrode-side protruding region 800x in electrode assembly 200 after being inserted into the case main body is about 1.0 mm to 2.5 mm.

On the other hand, negative-electrode-side protruding region 800y of separator 800 is also in a state in which the regions thereof in abutment with first plate portion 617 and second plate portion 618 of spacer 600 are crushed. In this case, a length (Y3 in the figure) by which negative-electrode-side protruding region 800y is crushed is larger than that on the positive-electrode-side protruding region 800x side and exceeds about 1.5 mm. Therefore, the width of negative-electrode-side protruding region 800y in electrode assembly 200 after being inserted into the case main body is about 0.5 mm to 2.5 mm. This is due to the following reason: when inserting the electrode assembly into the case main body, electrode assembly 200 is pushed into case main body 110 by external force F applied to sealing plate 120 while first plate portion 617 and second plate portion 618 of spacer 600 are in abutment with negative-electrode-side protruding region 800y.

Thus, although the regions (at four locations in total) of separator 800 in abutment with first plate portions 617 and second plate portions 618 of spacers 600 disposed at the both ends are crushed, negative-electrode-side protruding region 800y of separator 800 serves as a cushion because the protruding length of negative-electrode-side protruding region 800y is provided to be larger than the protruding length of positive-electrode-side protruding region 800x, thereby suppressing damage of the end portion of the negative electrode of the electrode assembly on the negative electrode tab 230 side when inserting electrode assembly 200 into the case main body.

Further, in the case where case 100 is raised such that injection hole 134 faces upward when injecting the electrolyte solution into case 100 via injection hole 134 (in the case where the X direction corresponds to the upward/downward direction), a load is applied to a portion of negative-electrode-side protruding region 800y on the negative electrode tab 230 side so as to bend the portion of negative-electrode-side protruding region 800y, with the result that the electrolyte solution can be suppressed from exiting from the end portion of the electrode assembly during charging and discharging and precipitation of Li in the vicinity of negative electrode tab 230 can be suppressed.

Further, since a distance Ly from the end portion of negative electrode active material layer 212 on the negative electrode tab 230 side to the sealing plate 120 side of the spacer 600 is smaller than a distance Lx from the end portion of positive electrode protective layer 243 on the positive electrode tab 260 side to the sealing plate 130 side of spacer 600 after the manufacturing of secondary battery 1 is completed, a space volume from the end portion of negative electrode active material layer 212 on the negative electrode tab 230 side to sealing plate 120 is assumed to be smaller than a space volume from the end portion of positive electrode protective layer 243 on the positive electrode tab 260 side to sealing plate 130. Specifically, protrusion allowance dimension Tx of positive electrode tab 260 from the end portion of positive electrode protective layer 243 and protrusion allowance dimension Ty of positive electrode tab 260 from the end portion of negative electrode active material layer 212 before electrode assembly 200 is inserted into the case main body are provided to be substantially the same; however, after the manufacturing of secondary battery 1 is completed, a distance Hy (distance from the root of the tab to the current collector) shown in Fig. 12 (positive electrode side) is assumed to be larger than a distance Hx (distance from the root of the tab to the current collector) shown in Fig. 11 (negative electrode side).

### (Positive Electrode Plate and Negative Electrode Plate)

Hereinafter, exemplary suitable configurations of the positive electrode plate and the negative electrode plate in secondary battery 1 according to the present embodiment will be described, but the scope of the present technology is not limited thereto.

In the positive electrode plate, positive electrode core body 241 is composed of, for example, a metal foil containing aluminum, an aluminum alloy, or the like. The thickness of positive electrode core body 241 is, for example, about 3 µm or more, and is preferably about 5 µm or more. The thickness of positive electrode core body 241 is, for example, about 30 µm or less, and is preferably about 20 µm or less.

Positive electrode active material layer 242 includes a positive electrode active material. Positive electrode active material layer 242 may include a binder (such as PVDF) or a conductive member (such as a carbon material) in addition to the positive electrode active material. The positive electrode active material is preferably a lithium transition metal composite oxide or the like. The positive electrode active material may be a mixture of a plurality of types of materials.

The thickness of positive electrode active material layer 242 is preferably about 30 µm or more, is more preferably about 40 µm or more, and is further preferably about 50 µm or more, for example. The thickness of positive electrode active material layer 242 is preferably about 500 µm or less, and is more preferably about 300 µm or less, for example.

Positive electrode protective layer 243 has higher electric resistance than that of positive electrode active material layer 242. Positive electrode protective layer 243 includes substantially no positive electrode active material or includes only a slight amount of the positive electrode active material. For example, the mass of the positive electrode active material therein with respect to the total mass of positive electrode protective layer 243 is about 5% or less, and is preferably about 1% or less.

Positive electrode protective layer 243 preferably includes inorganic particles (for example, alumina, boehmite, or the like). Positive electrode protective layer 243 preferably includes the inorganic particles and a binder. Positive electrode protective layer 243 preferably includes about 50 mass% or more of the inorganic particles. Positive electrode protective layer 243 may be an insulating resin layer or may include a carbon material having electric conductivity.

Positive electrode protective layer 243 is preferably formed on positive electrode core body 241 along an end portion of its portion at which positive electrode active material layer 242 is formed. Positive electrode protective layer 243 is preferably disposed to face the end portion of negative electrode active material layer 212 with a separator (insulating sheet) being interposed therebetween. Thus, a short circuit between positive electrode core body 241 and the end portion of negative electrode active material layer 212 can be suppressed.

The thickness of positive electrode protective layer 243 is preferably smaller than the thickness of positive electrode active material layer 242. The thickness of positive electrode protective layer 243 is preferably about 10 µm or more, is more preferably about 20 µm or more, and is further preferably about 30 µm or more. The thickness of positive electrode protective layer 243 is preferably about 200 µm or less, is more preferably about 100 µm or less, and is further preferably about 50 µm or less, for example.

In the negative electrode plate, negative electrode core body 211 is preferably composed of a metal including, for example, copper or a copper alloy, and is more preferably composed of a metal foil.

The thickness of negative electrode core body 211 is, for example, about 3 µm or more, and is preferably about 5 µm or more. The thickness of negative electrode core body 211 is, for example, about 30 µm or less, and is preferably about 20 µm or less.

Negative electrode active material layer 212 includes a negative electrode active material. Negative electrode active material layer 212 may include a binder (such as SBR or CMC) and a conductive member (such as a carbon material) in addition to the negative electrode active material. The negative electrode active material is preferably a carbon material such as graphite or a silicon material such as SiO or SiC. The negative electrode active material may be a mixture of a plurality of types of materials.

The thickness of negative electrode active material layer 212 is preferably about 50 µm or more, is more preferably about 60 µm or more, and is further preferably about 70 µm or more, for example. The thickness of negative electrode active material layer 212 is preferably about 500 µm or less, and is more preferably about 300 µm or less, for example.

Since separator 800 is greatly crushed on the negative electrode tab 230 side as described above, separator 800 preferably has strength to some extent and it is preferable to use, for example, a material having a tensile break strength of 500 kgf/cm² or more in a TD direction, which is a direction of crushing. Examples of the material include a single-layer film or stacked-layer film composed of polyethylene, polypropylene, or the like and having a thickness of about 5 µm to 20 µm. Further, an insulating heat-resistant layer including a ceramic such as alumina, boehmite, or magnesia and a binder (such as PVDF) may be formed on one surface or each of both surfaces of the separator.

### (Other Implementations of Electrode Assembly)

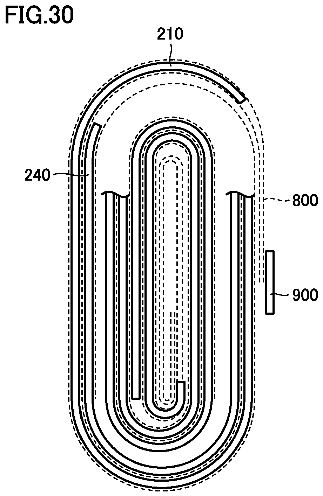

Other implementations of the electrode assembly will be described with reference to Figs. 28 to 30. Figs. 29 and 30 are schematic cross sectional views showing various implementations of the electrode assembly. It should be noted that in each of the figures, a separator fixing tape 900 is shown.

In the above-described embodiment, it has been described that as the electrode assembly, there is employed a stacked type electrode assembly of an individual-sheet type in which independent separators 800 are disposed between negative electrode plates 210 and positive electrode plates 240 as shown in Fig. 28; however, the implementation of the electrode assembly is not limited thereto. As shown in Fig. 29, there may be employed a stacked type electrode assembly of a meandering type in which one separator 800 is disposed to extend back and forth between negative electrode plates 210 and positive electrode plates 240. Further, as shown in Fig. 30, there may be employed a wound type electrode assembly in which a separator 800 is disposed between negative electrode plate 210 and positive electrode plate 240 and is wound around an axis.

It should be noted that since the negative electrode tab 230 side of separator 800 is expected to be crushed in the above-described embodiment, there is a possibility that crushing of the negative electrode tab 230 side is inhibited when the separator extending in the thickness direction (Y direction) of the electrode assembly exists. Therefore, this preferable crushing effect can be obtained in the order of the individual-sheet type, the meandering type, and the wound type.

On the other hand, it is considered that rapid charging performance in the stacked type is higher than that in the wound type, and in the meandering type of the stacked type, rigidity is obtained in folded portions of the separator at its upper and lower ends and the electrode plates are less likely to be damaged as compared with the individual-sheet type of the stacked type. Therefore, the meandering type is considered to be suitable for the step of inserting the electrode assembly into the case main body and the step of injecting the electrolyte solution into the case in the present embodiment.

As described above, according to the technology of the present disclosure, possible damage of the electrode assembly can be avoided when inserting the electrode assembly into the battery case and/or when raising the case at the time of injection. As a result, it is possible to provide a secondary battery having high energy density and high reliability and a method of manufacturing such a secondary battery.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A secondary battery comprising:
an electrode assembly (200) in which a positive electrode plate (240) and a negative electrode plate (210) are stacked with a separator (800) being interposed between the positive electrode plate (240) and the negative electrode plate (210); and
a case (100) that accommodates the electrode assembly (200), wherein
the case (100) includes a case main body (110) provided with a first opening (113) at one end portion of the case main body (110) and a second opening (114) at the other end portion of the case main body (110), a first sealing plate (120) that seals the first opening (113), and a second sealing plate (130) that seals the second opening (114),
a first spacer (600) is disposed between the first sealing plate (120) and the electrode assembly (200),
a second spacer (600) is disposed between the second sealing plate (130) and the electrode assembly (200),
the positive electrode plate (240) has a positive electrode tab (260) at an end portion of the positive electrode plate (240) on the second sealing plate (130) side,
the negative electrode plate (210) has a negative electrode tab (230) at an end portion of the negative electrode plate (210) on the first sealing plate (120) side,
the positive electrode plate (240) includes a positive electrode core body (241), a positive electrode active material layer (242) formed on the positive electrode core body (241), and a positive electrode protective layer (243) formed on the positive electrode core body (241),
in the positive electrode plate (240), the positive electrode protective layer (243) is located on the positive electrode tab (260) side with respect to the positive electrode active material layer (242),
the negative electrode plate (210) includes a negative electrode core body (211) and a negative electrode active material layer (212) formed on the negative electrode core body (211),
at an end portion of the separator (800) on the positive electrode tab (260) side, the separator (800) has a positive-electrode-side protruding region (800x) protruding to the positive electrode tab (260) side with respect to an end portion of the positive electrode protective layer (243),
at an end portion of the separator (800) on the negative electrode tab (230) side, the separator (800) has a negative-electrode-side protruding region (800y) protruding to the negative electrode tab (230) side with respect to an end portion of the negative electrode active material layer (212), and
at the negative-electrode-side protruding region (800y), the separator (800) has a region crushed by the first spacer (600).

2. The secondary battery according to claim 1, wherein
at the positive-electrode-side protruding region (800x), the separator (800) has a region crushed by the second spacer (600), and
a width by which the negative-electrode-side protruding region (800y) is crushed is larger than a width by which the positive-electrode-side protruding region (800x) is crushed.

3. The secondary battery according to claim 1 or 2, wherein in the separator (800), a width of the negative-electrode-side protruding region (800y) is larger than a width of the positive-electrode-side protruding region (800x).

4. The secondary battery according to any one of claims 1 to 3, wherein a space volume from the end portion of the negative electrode active material layer (212) to the first sealing plate (120) is smaller than a space volume from the end portion of the positive electrode protective layer (243) to the second sealing plate (130).

5. A method of manufacturing a secondary battery, the method comprising:
producing an electrode assembly (200) in which a positive electrode plate (240) and a negative electrode plate (210) are stacked with a separator (800) being interposed between the positive electrode plate (240) and the negative electrode plate (210); and
accommodating the electrode assembly (200) in a case (100), wherein
the case (100) includes a case main body (110) provided with a first opening (113) at one end portion of the case main body (110) and a second opening (114) at the other end portion of the case main body (110), a first sealing plate (120) that seals the first opening (113), and a second sealing plate (130) that seals the second opening (114),
the accommodating the electrode assembly (200) in the case (100) includes inserting the electrode assembly (200) into the case main body (110) through the first opening (113),
the electrode assembly (200) has a main body portion, a positive electrode tab (260) located on the second sealing plate (130) side with respect to the main body portion and provided on the positive electrode plate (240), and a negative electrode tab (230) located on the first sealing plate (120) side with respect to the main body portion and provided on the negative electrode plate (210),
the positive electrode plate (240) includes a positive electrode core body (241), a positive electrode active material layer (242) formed on the positive electrode core body (241), and a positive electrode protective layer (243) formed on the positive electrode core body (241),
in the positive electrode plate (240), the positive electrode protective layer (243) is located on the positive electrode tab (260) side with respect to the positive electrode active material layer (242),
the negative electrode plate (210) includes a negative electrode core body (211) and a negative electrode active material layer (212) formed on the negative electrode core body (211),
at an end portion of the main body portion of the electrode assembly (200) on the positive electrode tab (260) side, the positive electrode protective layer (243) protrudes to the positive electrode tab (260) side with respect to an end portion of the negative electrode active material layer (212),
at an end portion of the main body portion of the electrode assembly (200) on the negative electrode tab (230) side, the negative electrode active material layer (212) protrudes to the negative electrode tab (230) side with respect to an end portion of the positive electrode active material layer (242),
at an end portion of the separator (800) on the positive electrode tab (260) side, the separator (800) has a positive-electrode-side protruding region (800x) protruding to the positive electrode tab (260) side with respect to an end portion of the positive electrode protective layer (243),
at an end portion of the separator (800) on the negative electrode tab (230) side, the separator (800) has a negative-electrode-side protruding region (800y) protruding to the negative electrode tab (230) side with respect to an end portion of the negative electrode active material layer (212), and
a protruding length of the negative-electrode-side protruding region (800y) is larger than a protruding length of the positive-electrode-side protruding region (800x).

6. The method of manufacturing a secondary battery according to claim 5, wherein each of the protruding length of the negative-electrode-side protruding region (800y) and the protruding length of the positive-electrode-side protruding region (800x) is 2 mm or more.

7. The method of manufacturing a secondary battery according to claim 5 or 6, wherein
the inserting the electrode assembly (200) into the case main body (110) through the first opening (113) includes inserting the electrode assembly (200) into the case main body (110) through the first opening (113) with the spacer (600) being disposed between the first sealing plate (120) and the electrode assembly (200), and
the negative-electrode-side protruding region (800y) is accommodated in the case main body (110) with the negative-electrode-side protruding region (800y) being crushed at a region in abutment with the spacer (600).

8. The method of manufacturing a secondary battery according to any one of claims 5 to 7, wherein the electrode assembly (200) is inserted into the case main body (110) from an end portion of the electrode assembly (200) on a side on which the positive electrode tab (260) is disposed.

9. The method of manufacturing a secondary battery according to claim 8, wherein after the negative electrode tab (230) and the first sealing plate (120) are connected to each other, the electrode assembly (200) is inserted into the case main body (110).

10. The method of manufacturing a secondary battery according to claim 8, wherein after the electrode assembly (200) is inserted into the case main body (110), the positive electrode tab (260) and the second sealing plate (130) are connected to each other.

11. The method of manufacturing a secondary battery according to any one of claims 5 to 10, wherein the negative electrode tab (230) is electrically connected, through a negative electrode current collector (400A), to a negative electrode terminal (301) attached to the first sealing plate (120).

12. The method of manufacturing a secondary battery according to any one of claims 5 to 10, wherein the positive electrode tab (260) is electrically connected, through a positive electrode current collector (400B), to a positive electrode terminal (302) attached to the second sealing plate (130).
